# EUROPEAN PATENT APPLICATION

(11) **EP 2 156 889 A1**
(43) Date of publication of application: **24.02.2010**
(21) Application number: 09166913.5
(22) Date of filing: 31.07.2009
(51) Int. Cl.: B01L 3/00, B29C 65/54

(54) **Joined body to provide fluid analysis and manufacturing method thereof**

(30) Priority: 11.08.2008 KR 20080078271
(71) Applicant: Samsung Electronics Co., Ltd., Suwon-si, Gyeonggi-do 442-742 (KR)
(72) Inventor: Lee, Dong Yul, Suweon-si Gyeonggi-do (KR); Song, Jun Gyu, Suweon-si Gyeonggi-do (KR)
(74) Representative: D'Halleweyn, Nele Veerle Trees Gertrudis

(57) **Abstract**

A joined body (100) to provide fluid analysis having an improved joining structure, and a manufacturing method thereof. The joined body (100) includes a plurality of pieces (110,120,130), and adhesive passages (140) formed inside the joined body (100) and filled with an adhesive resin to form a joint (150), where the pieces are bonded to each other by the joint.

## Description

The present general inventive concept relates to a joined body for fluid analysis and a manufacturing method thereof, and more particularly to a joined body having an improved joining structure.

Recently, various products made of synthetic resin have been produced by injection molding. However, some of the synthetic resin products formed by injection molding may have a complicated structure. Such a synthetic resin product, which has a complicated structure, is typically formed by joining a plurality of separately molded pieces constituting the product.

Generally, a conventional joined body is formed by bonding a plurality of separately molded pieces constituting the joined body. The bonding of the pieces is achieved by an adhesive coated on the joining surfaces of the pieces.

The present general inventive concept provides a joined body for fluid analysis having an improved joining structure and a manufacturing method thereof.

The object of the present invention is achieved by the features of claim 1. Additionally, the object of the present invention is also achieved by the features of the method presented in claim 11.

Additional features and utilities of the present general inventive concept will be set forth in part in the description which follows and, in part, will be obvious from the description, or may be learned by practice of the general inventive concept.

Embodiments of the present general inventive concept can be achieved by providing a joined body including a plurality of pieces, the joined body including, at least one adhesive passage formed inside the joined body and filled with an adhesive resin to form a joint, wherein at least two of the pieces are bonded to each other by the joint.

The joined body may further include at least one hollow portion, and the joint may prevent a material present in the hollow portion from leaking between the bonded pieces, or may prevent an external material from flowing into the hollow portion between the bonded pieces.

The joint may surround the hollow portion.

A fluid may flow through the hollow portion.

The joined body may further include a position aligner to align the pieces to be bonded to each other.

The position aligner may include a first position aligning portion provided at one of the pieces to be bonded to each other, and a second position aligning portion provided at the other one of the pieces and combined with the first position aligning portion.

The plurality of pieces may be manufactured by an injection molding process.

The at least one adhesive passage may include adhesive passages formed to communicate together, and the adhesive resin is filled in the adhesive passages through a single gate.

Embodiments of the present general inventive concept can also be achieved by providing a joined body including a plurality of pieces, the joined body including, a flow passage through which a fluid flows, and an adhesive passage formed inside the joined body and filled with an adhesive resin to form a joint, wherein the joint bonds at least two of the pieces to each other, and prevents the fluid flowing in the flow passage from leaking.

Embodiments of the present general inventive concept can also be achieved by providing a fluid analyzer, such as a blood analyzer, including a plurality of joined pieces, the fluid analyzer including, at least one adhesive passage formed inside the fluid analyzer and filled with an adhesive resin to form a joint, wherein at least two of the pieces are bonded to each other by the joint.

The fluid analyzer may further include a flow passage through which an analysis object flows, and the adhesive resin may prevent the analysis object flowing in the flow passage from leaking between the bonded pieces, or may prevent an external material from flowing into the flow passage between the bonded pieces.

The fluid to be analyzed may be blood.

Embodiments of the present general inventive concept can also be achieved by providing a manufacturing method of a joined body including a plurality of joined pieces, the method including, forming the pieces such that the pieces have adhesive passages, aligning the pieces such that the adhesive passages communicate with one another, and filling an adhesive resin in the communicating adhesive passages.

Embodiments of the present general inventive concept can also be achieved by providing a fluid analyzer, including a plurality of pieces, an adhesive passage formed on each of the plurality of pieces to accommodate an adhesive, and at least one joint formed by the adhesive in the adhesive passages to bond the plurality of pieces together.

At least one of the plurality of pieces may include a flow passage to accommodate a fluid.

The fluid may be selected from the group consisting of blood, urine, saliva, semen, and sweat.

Embodiments of the present general inventive concept can also be achieved by providing a method of manufacturing a fluid analyzer, including forming a plurality of pieces such that each of the plurality of pieces includes an adhesive passage, and filling the adhesive passages with an adhesive to bond the plurality of pieces together.

The forming of a plurality of pieces may include forming at least one flow passage among the plurality of pieces to accommodate a fluid.

The fluid may be selected from the group consisting of blood, urine, saliva, semen, and sweat.

### BRIEF DESCRIPTION OF THE DRAWINGS

These and/or other features and utilities of the present general inventive concept will become apparent and more readily appreciated from the following description of the exemplary embodiments, taken in conjunction with the accompanying drawings, of which:
FIG. 1 is an exploded perspective view illustrating a joined body according to an exemplary embodiment of the present general inventive concept;
FIG. 2 illustrates an assembled perspective view of the joined body according to the exemplary embodiment of FIG. 1;
FIGS. 3A to 3F illustrate a manufacturing method of a joined body according to another exemplary embodiment of the present general inventive concept; and
FIG. 4 illustrates a cross-sectional view of a joined body according to another exemplary embodiment of the present general inventive concept.

### DETAILED DESCRIPTION OF THE EMBODIMENTS

Reference will now be made in detail to exemplary embodiments of the present general inventive concept, examples of which are illustrated in the accompanying drawings, wherein like reference signs refer to like elements throughout. The exemplary embodiments are described below to explain the present general inventive concept by referring to the figures.

Hereinafter, embodiments of the present invention will be described in detail with reference to the accompanying drawings.

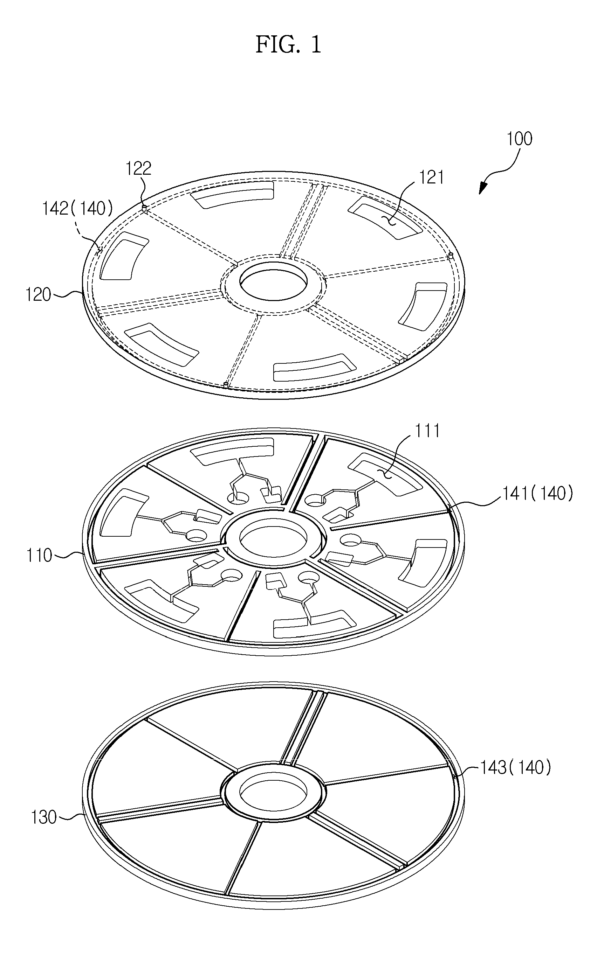

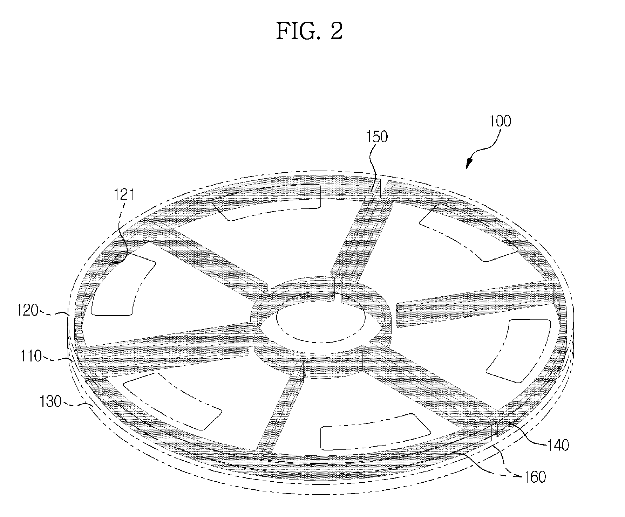

FIG. 1 is an exploded perspective view illustrating a joined body according to an exemplary embodiment of the present general inventive concept. FIG. 2 illustrates an assembled perspective view of the joined body according to the embodiment of FIG. 1. For reference, FIGS. 1 and 2 schematically illustrate a fluid analyzing disk, to analyze fluids such as blood, as an example of a joined body manufactured according to an exemplary embodiment of the present general inventive concept.

As illustrated in FIG. 1, a joined body 100 according to an exemplary embodiment of the present general inventive concept includes a plurality of pieces 110, 120 and 130 joined together. For example, where the joined body 100 is used as a blood analyzing disk, as in the exemplary embodiment illustrated in FIG. 1, the pieces 110, 120, and 130 of the joined body 100 are used as a main plate, an upper plate, and a lower plate, respectively. Hereinafter, the pieces 110, 120, and 130 are referred to as the main, upper, and lower plates, respectively. The upper plate 120 and the lower plate 130 are joined to upper and lower surfaces of the main plate 110, respectively. For example, a lower surface of the upper plate 120 is joined to the upper surface of the main plate 110, and an upper surface of the lower plate 130 is joined to the lower surface of the main plate 110, thus forming joined body 100.

The upper plate 120 may include a plurality of inlets 121 through which an object to be inspected is introduced. For example, the inspection object may be a bodily fluid such as blood, urine, saliva, semen, sweat, etc. However, the object to be inspected is not limited thereto, and may be any type of fluid.

The main plate 110 includes a plurality of flow passages 111 to allow the object to be inspected to be introduced through the inlets 121 to flow through the flow passages 111, and to separate the object to be inspected into components respectively corresponding to the flow passages 111. Each flow passage 111 may be provided with a valve (not illustrated) to selectively open and close the flow passage 111. Additionally, each flow passage 111 may be provided with a biosensor (not illustrated) or a reagent (not illustrated) according to the purpose of an inspection.

The joined body 100 according to the present exemplary embodiment may further include adhesive passages 140 formed inside the joined body 100 and filled with an adhesive to form joints 150. The adhesive may be an adhesive resin, or any other type of adhesive suitable for the intended purpose. The adhesive passages may include runners "r" and gates "g" to disperse the adhesive resin among the adhesive passage 140.

Reference numerals 141, 142 and 143 represent the adhesive passages 140 defined by the main plate 110, the upper plate 120 and the lower plate 130, respectively. The main plate 110, the upper plate 120 and the lower plate 130 are aligned together while being in contact with one another, and then the adhesive passages 140 are filled with the adhesive resin through a plurality of filling ports 122 provided at an upper side of the upper plate 120. The adhesive resin is then cooled to form the joints 150 in the adhesive passages 140.

In the joined body 100 according to the present exemplary embodiment, the pieces 110, 120 and 130, that is, the main plate 110, the upper plate 120, and the lower plate 130, respectively, are bonded to one another by the joints 150. The bonding of the pieces 110, 120, and 130 by the joints 150 improves a joining strength between the bonded pieces. The joints 150 also enhance the air tightness among the bonded pieces 110, 120 and 130. In other words, since the flow passages 111 are surrounded by the joints 150, an object to be inspected while flowing through the flow passages 111 can be prevented from leaking through gaps 160 defined as being between the bonded pieces 110, 120 and 130, and an external material can also be prevented from flowing into the flow passages 111 through the gaps 160. Particularly, since an adhesive, or the like, is not coated over the joining surfaces of the pieces, it is possible to prevent gaps from being formed among the pieces due to non-uniform coating of the adhesive over the joining surfaces. For example, the upper surface of the lower plate 130 and the lower surface of the main plate 110 may be formed in such a way that when the lower plate 130 and the main plate 110 are bonded to one another by the joints 150, an object to be inspected is prevented from passing outside of the flow passages 111. In this example, since the object to be inspected is prevented from leaking from the flow passages 111, the object to be inspected will not leak through gaps 160, and an external material is also prevented from entering the flow passages 111.

The pieces of the joined body 100 according to the present general inventive concept can be manufactured and bonded by a process, such as an injection molding process. Accordingly, an enhancement in the productivity of the joined body is achieved.

Further, the adhesive passages 140 may be formed to communicate together. In this case, it is possible to reduce the numbers of runners and gates provided to supply the adhesive resin, and thus to facilitate the design of the mold. For example, the adhesive passages 140 may be formed in such a way that the adhesive resin may be supplied at only one point of the joined body 100, then dispersed among the adhesive passages 140 in order to bond the pieces 110, 120, and 130 together.

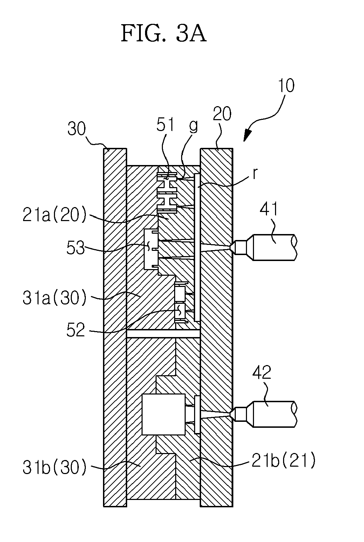

FIGS. 3A to 3F illustrate a manufacturing method of a joined body according to an exemplary embodiment of the present general inventive concept. For reference, the manufacturing method will be described in conjunction with an example in which a joined body having a simple shape is manufactured, for convenience of the description. However, the shape of the joined body manufactured according to the present general inventive concept is not limited thereto.

As illustrated in the drawings, an injection molding apparatus 10 according to the embodiment of the present general inventive concept includes a fixed support plate 20, a moving support plate 30 spaced apart from the fixed support plate 20, a fixed mold 21 formed on the fixed support plate 20 and a moving mold 31 formed on the moving support plate 30. The fixed mold 21 may include a first fixed mold 21a and a second fixed mold 21b, and the moving mold 31 may include a first moving mold 31a and a second moving mold 31b.

The moving support plate 30 is supported by a movement guide such as a rail or a guide bar (not illustrated). Accordingly, the moving support plate 30 may move toward the fixed support plate 20 or away from the fixed support plate 20, as illustrated in FIGS. 3A - 3F.

Reference numerals 41 and 42 denote injection cylinders to supply melted resin to the molds, respectively. Reference letters r and g denote runners and gates, through which the melted resin injected from the injection cylinders 41 and 42 flows.

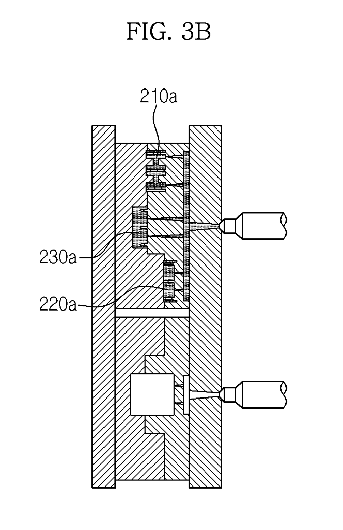

As illustrated in FIGS. 3A and 3B, when the moving support plate 30 moves toward the fixed support plate 20 to combine the molds, a plurality of molding spaces 51, 52 and 53 are formed by the first fixed mold 21 a and the first moving mold 31 a. The melted resin is supplied to the molding spaces 51, 52 and 53 and cooled to form first, second and third pieces 210a, 220a and 230a. In this case, the first, second and third pieces 210a, 220a and 230a are molded to have adhesive passages 241, 242 and 243 filled with the adhesive resin, respectively.

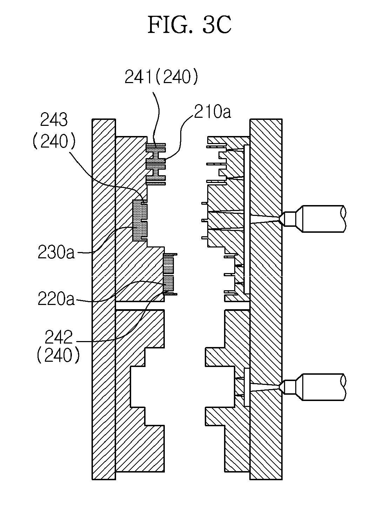

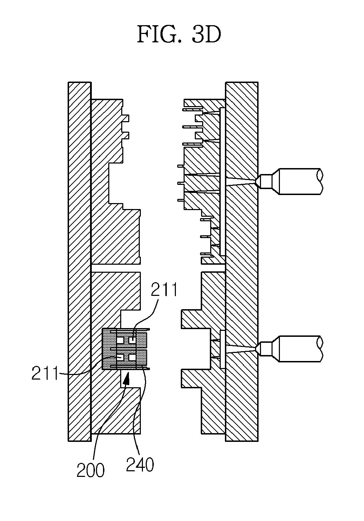

Then, as illustrated in FIGS. 3C and 3D, the first fixed mold 21 a and the first moving mold 31 a are separated from each other. The first, second and third pieces 210a, 220a and 230a are fed to the second moving mold 31b such that they are arranged in contact with one another. For example, a top surface of the third piece 230a may be in contact with a bottom surface of the first piece 210a, and a top surface of the first piece 210a may be in contact with a bottom surface of the second piece 220a, as illustrated in FIG. 3D. In this case, the feeding and arrangement of the first, second and third pieces 210a, 220a and 230a may be automatically performed by an apparatus having a vacuum chucker. Reference numeral 211 denotes flow passages formed in a joined body 200. Of course, a simple hollow portion or the like may be formed in the joined body 200.

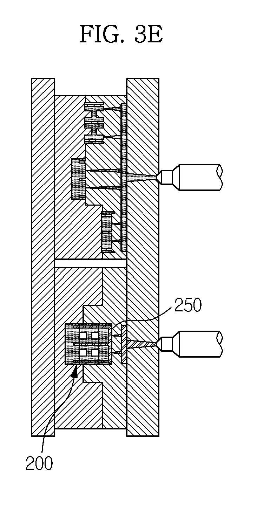

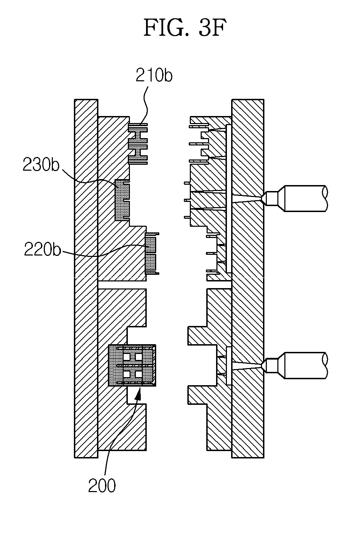

As illustrated in FIGS. 3E and 3F, the adhesive resin is filled in adhesive passages 240 of the pieces 210a, 220a and 230a as arranged, in contact with one another, between the second fixed mold 21b and the second moving mold 31b, to form joints 250. The filled adhesive resin is cooled to complete the joined body 200. As illustrated in FIGS. 3E and 3F, during the molding of the joints 250 in the second fixed mold 21b and second moving mold 31b, new first, second and third pieces 210b 220b and 230b may be formed in the first molds 21a and 31a. In other words, when the adhesive passages 240 of the pieces 210a, 220a, and 230a are being filled, new pieces 210b, 220b, and 230b may be formed in the same manner as pieces 210a, 220a, and 230a, in order to expedite the manufacturing process.

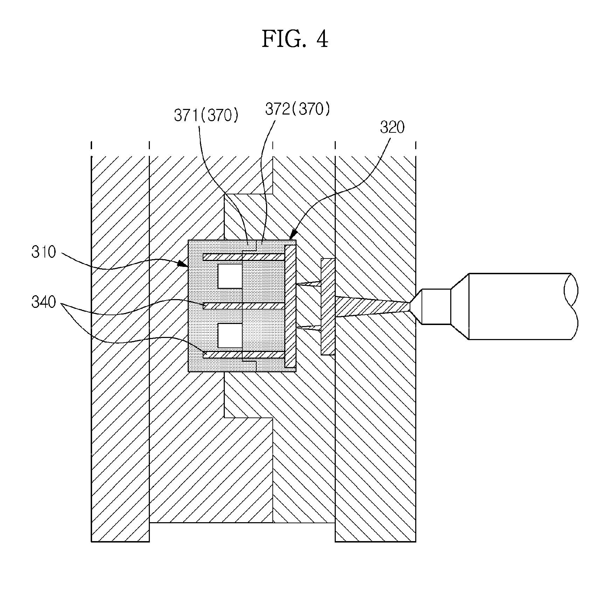

FIG. 4 illustrates a cross-sectional view of a joined body according to an exemplary embodiment of the present general inventive concept.

As illustrated in FIG. 4, a joined body 300 according to an exemplary embodiment of the present general inventive concept includes a position aligner 370 provided to accurately align previously manufactured pieces 310 and 320.

Specifically, the position aligner 370 includes a first position aligning portion 371 provided at any one of the pieces 310 and 320 to be joined to each other, and a second position aligning portion 372 provided at the other one of the pieces 310 and 320 and combined with the first position aligning portion 371. For example, if the first position aligning portion 371 is provided at piece 310, the second position aligning portion 372 is provided at piece 320.

As the pieces 310 and 320 are accurately aligned, it is possible to easily fill adhesive passages 340 with adhesive resin and to prevent the pieces 310 and 320 from moving while the adhesive passages 340 are being filled with the adhesive resin.

Although the joined body of the present general inventive concept has been described as being used as a blood analyzer, the present general inventive concept may be applied to various products in addition to medical equipment such as a urine analyzer, saliva analyzer, semen analyzer, sweat analyzer, etc. Additionally, the joined body may be applied to any products which involve the analysis of a fluid.

Further, although the above-described pieces may be separately manufactured by injection molding as illustrated in FIGS. 3A - 3F, the pieces may also be manufactured by methods other than injection molding, and then bonded together in accordance with the above-described exemplary embodiment of the present general inventive concept.

Additionally, although the joined body includes flow passages, through which a fluid flows, in the present general inventive concept, the joined body may include a simple hollow portion formed to be surrounded by the joined body.

Further, there is no limitation in the number of the pieces to be joined together, and some of the pieces may be joined by a method other than the method used in the present general inventive concept.

Although a few exemplary embodiments of the present general inventive concept have been illustrated and described, it would be appreciated by those skilled in the art that changes may be made in these exemplary embodiments without departing from the principles and spirit of the general inventive concept, the scope of which is defined in the appended claims and their equivalents.

## Claims

1. A joined body (100) including a plurality of pieces (110, 120, 130), comprising:
at least one adhesive passage (140) formed inside the joined body and filled with an adhesive resin to form a joint (150),
wherein at least two of the pieces are bonded to each other by the joint (150).

2. The joined body (100) according to claim 1, further comprising:
at least one hollow portion (111),
wherein the joint (150) prevents a material present in the hollow portion (111) from leaking, or prevents an external material from flowing into the hollow portion (111) between the bonded pieces, said material present in the hollow portion (111) preferably being a fluid flowing through the hollow portion (111).

3. The joined body (100) according to claim 2, wherein the joint (150) surrounds the hollow portion (111).

4. The joined body (100) according to any of the preceding claims, further comprising:
a position aligner (370) to align the pieces to be bonded to each other.

5. The joined body (100) according to claim 5, wherein the position aligner (370) includes a first position aligning portion (371) provided at one of the pieces to be bonded to each other, and a second position aligning portion (372) provided at another one of the pieces and combined with the first position aligning portion (371).

6. The joined body (100) according to claim 1, wherein the at least one adhesive passage (140) comprises adhesive passages formed to communicate together, and the adhesive resin is filled in the adhesive passages through a single gate.

7. The joined body (100) according to claim 1, wherein an adhesive passage is formed on each of said plurality of pieces to accommodate an adhesive, and at least one joint is formed by said adhesive in said adhesive passages to bond said plurality of pieces together.

8. The joined body (100) according to claim 7, wherein at least one of the plurality of pieces includes a flow passage to accommodate a fluid.

9. A joined body (100) according to any of the preceding claims, wherein the joined body is a fluid analyzer.

10. The joined body (100) of claim 9, wherein the fluid to be analyzed is selected from a group consisting of blood, urine, saliva, semen, and sweat.

11. A manufacturing method of a joined body including a plurality of joined pieces, comprising:
forming the pieces such that the pieces have adhesive passages; and
filling an adhesive resin in the communicating adhesive passages.

12. The method of claim 11, further comprising:
aligning the pieces such that the adhesive passages communicate with one another.

13. The method of any of claims 11 and 12, wherein the forming of a plurality of pieces includes forming at least one flow passage among the plurality of pieces to accommodate a fluid.

14. The method of any of claims 11 to 13, wherein the joined body is a fluid analyzer.

15. The method of claim 14, wherein the fluid is selected from a group consisting of blood, urine, saliva, semen, and sweat.
